Europäisches Patentamt

European Patent Office

Office européen des brevets

(19)

(11) Publication number: **0 489 408 A1**

## (12) EUROPEAN PATENT APPLICATION

(21) Application number: **91120780.1**

(22) Date of filing: **03.12.91**

(51) Int. Cl.5: **C22C 21/16**, C22F 1/057, //B32B15/01

(30) Priority: **03.12.90 US 620626**

(43) Date of publication of application:
**10.06.92 Bulletin 92/24**

(84) Designated Contracting States:
**DE FR GB IT**

(71) Applicant: **ALUMINUM COMPANY OF AMERICA**
**Alcoa Building**
**Pittsburgh Pennsylvania(US)**

(72) Inventor: **Naser, Delbert M.**
**943 Field Club Road**
**Pittsburgh PA, 15238(US)**
Inventor: **Colvin, Edward L.**
**211 Livingstone Avenue**
**Pittsburgh, PA 15238(US)**
Inventor: **Petit, Jocelyn I.**
**1057 Edgewood Road**
**New Kensington, PA 15068(US)**

(74) Representative: **Baillie, Iain Cameron et al**
**c/o Ladas & Parry, Altheimer Eck 2**
**W-8000 München 2(DE)**

(54) **Aircraft sheet.**

(57) Disclosed is a method of producing a sheet product having improved levels of toughness and fatigue crack growth resistance while maintaining high strength, comprising providing a body of an aluminum base alloy containing 4.2 to 4.7 wt.% Cu, 1.3 to 1.8 wt.% Mg, 0.8 to 1.3 wt.% Mn, 0.03 to 1 wt.% Zr, 0.15 wt.% max. Fe, 0.12 wt.% max. Si, the remainder aluminum, incidental elements and impurities and heating a body of the alloy to above 910°F to dissolve soluble constituents. Thereafter, the body is hot rolled in the range of about 600 to 900°F, solution heat treated for a time of less than about 15 minutes at a solution heat treating temperature, and rapidly cooled and naturally aged to provide a sheet product with improved levels of fatigue crack growth resistance while maintaining high strength.

## Background of the Invention

This invention relates to aluminum alloys suitable for use in aircraft applications and more particularly, it relates to an improved aluminum alloy and processing therefor having improved resistance to fatigue crack growth and fracture toughness and suited to use as aircraft skin.

The design of commercial aircraft requires different sets of properties for different types of structures on the airplane. In many parts, resistance to crack propagation either in the form of fracture toughness or fatigue crack growth is essential. Therefore, many significant benefits can be realized by improving fracture toughness and fatigue crack propagation.

A new material with improved toughness, for example, will have a higher level of damage tolerance. On the aircraft, this translates to improved safety for passengers and crew and weight savings in the structure which allows for improved fuel economy, longer flight range, greater payload capacity or a combination of these.

Cyclic loading occurs on a commercial jet airplane during the take off/landing when the interior of the airplane is pressurized. Typically, airplanes may see up to 100,000 pressurization cycles during their normal service lifetime. Thus, it will be noted that great benefit is derived from improved fracture toughness and resistance to fatigue crack growth.

U.S. Patent 4,336,075 discloses the use of AA2000 type aluminum alloy for aircraft wings.

The present invention provides aluminum base alloy sheet products and a method of fabricating sheet products from a body of the alloy. Further, the invention provides aluminum alloy sheet products suitable for aircraft applications such as wing skins and aircraft fuselage panels, which sheets are clad with a corrosion protecting outer layer.

## Summary of the Invention

A principal object of the invention is to provide an aluminum alloy and sheet product formed therefrom, the sheet product having improved fracture toughness and resistance to fatigue crack growth while maintaining high strength properties and corrosion resistance.

A further object of the present invention is to provide aluminum alloy sheet products having improved fracture toughness and resistance to fatigue crack growth for aircraft panels.

Yet a further object of the present invention is to provide aluminum alloy sheet products and a process for producing the sheet products so as to provide improved fracture toughness and increased resistance to fatigue crack growth while still maintaining high levels of strength.

Still a further object of the invention is to provide a method for processing an aluminum alloy into clad sheet products having improved resistance to fatigue crack growth while maintaining high strength properties and corrosion resistance.

And still a further object is to provide an Al-Cu-Mg-Mn clad sheet product for use as aircraft panels such as wing or fuselage skins having improved resistance to fatigue crack growth while maintaining high strength levels and improved fracture toughness.

These and other objects will become apparent from a reading of the specification and claims and an inspection of the claims appended hereto.

In accordance with these object, there is provided a method of producing a sheet product having improved levels of toughness and fatigue crack growth resistance while maintaining high strength, the method comprising providing a body of an aluminum base alloy containing 4.2 to 4.7 wt.% Cu, 1.3 to 1.8 wt.% Mg, 0.7 to 1.3 wt.% Mn, 0 to 1 wt.% of at least one of Zr, V, Hf, Cr and Sc, 0.15 wt.% max. Fe, 0.12 wt.% max. Si, the remainder aluminum, incidental elements and impurities. The method further comprises heating a body of the alloy to above 900°F to dissolve soluble constituents. Thereafter, the body is hot rolled in the range of about 600 to 900°F, solution heat treated for a time of less than about 15 minutes, for example, at the solution heat treating temperature, then rapidly cooled and naturally aged to provide a sheet product with improved levels of fatigue crack growth resistance and fracture toughness while maintaining high strength levels.

## Detailed Description of the Preferred Embodiments

As noted, the alloy of the present invention comprises 4.2 to 4.7 wt.% Cu, 1.3 to 1.8 wt.% Mg, 0.7 to 1.3 wt.% Mn, 0 to 1 wt.% of at least one of Zr, V, Hf, Cr and Sc, 0.15 wt.% max. Fe, 0.12 wt.% max. Si, the remainder aluminum, incidental elements and impurities. Impurities are preferably limited to 0.05% each and the combination of impurities preferably should not exceed 0.15%. The sum total of incidental elements and impurities preferably does not exceed 0.45%.

A preferred alloy would contain 4.2 to 4.7 wt.% Cu, 1.3 to 1.7 wt.% Mg, 0.72 to 1.3 wt.% Mn, typically 0.8 to 1.3 wt.% Mn, 0.05 to 0.5 wt.% Zr, 0.1 wt.% max. Fe, 0.1 wt.% max. Si, preferably 0.05 to 0.25 wt.% Zr, the balance aluminum, incidental elements and impurities. Zr should be present if it is desired to make an unrecrystallized product. By unrecrystallized is meant that no more than 20 vol.% of the product is recrystallized. Elements such as Zn preferably have a maximum of 0.2 wt.% and Cr 0.2 wt.% with V, Hf, Sc and Ce not greater than 0.5 wt.% with lower limits for these elements being 0.02 wt.% when they are present.

Mn contributes to or aids in grain size control during operations that cause the metal to recrystallize. Very large grains are detrimental to properties such as fracture toughness, formability and corrosion resistance.

Fe and Si levels are kept low to limit formation of the constituent phases $Al_7Cu_2Fe$ and $Mg_2Si$ which are detrimental to fracture toughness and fatigue crack growth resistance. These phases have low solubility in Al-alloy and once formed cannot be eliminated by thermal treatments. Formation of $Al_7Cu_2Fe$ and $Mg_2Si$ phases can also lower the strength of the product because their formation reduces the amount of Cu and Mg available to form strengthening precipitates. Constituents such as $Al_7Cu_2Fe$ and $Mg_2Si$ are particularly important to avoid because they cannot be dissolved; thus, iron is kept to a very low level to avoid such constituents. That is, a decrease in Fe and Si increases toughness and resistance to fatigue crack growth. Thus, in the present invention, it is preferred to control Fe to below 0.10 wt.% and Si below 0.10 wt.%.

Cu and Mg must be carefully controlled to maintain good strength while providing the benefits in toughness and fatigue. The Cu and Mg levels must be low enough to allow for dissolution of the slightly soluble $Al_2CuMg$ and $Al_2Cu$ constituent phases during high temperature processing yet high enough to maximize the amount of free Cu and Mg available to form the strengthening precipitate phases. This leaves a very narrow range of Cu and Mg compositions which will produce the desired properties in the final product.

The following equations may be used to estimate the "free Cu" and "free Mg"; that is, the amount of Cu and Mg that are available to form strengthening phases.

$$Cu_{Free} = Cu_{Total} - 2.28Fe - 0.74(Mn - 0.2)$$
$$Mg_{Free} = Mg_{Total} - 1.73(Si - 0.05)$$

As well as providing the alloy product with controlled amounts of alloying elements as described herein, it is preferred that the alloy be prepared according to specific method steps in order to provide the most desirable characteristics of both strength, fracture toughness, corrosion resistance and resistance to fatigue crack growth as required, for example, for use as aircraft skins or panels. The alloy as described herein can be provided as an ingot or slab for fabrication into a suitable wrought product by casting techniques currently employed in the art for cast products with continuous casting being preferred. Slabs resulting from belt casters or roll casters also may be used.

The ingot or slab of the alloy of the invention may be provided with a cladding and then processed in accordance with the invention. Such clad products utilize a core of the aluminum base alloy of the invention and a cladding of higher purity alloy which corrosion protects the core. The cladding includes essentially unalloyed aluminum or aluminum containing not more than 0.1 or 1% of all other elements. However, Zn can be present as in AA7072, for example. Thus, the cladding on the core may be selected from Aluminum Association alloys 1100, 1200, 1230, 1135, 1235, 1435, 1145, 1345, 1250, 1350, 1170, 1175, 1180, 1185, 1285, 1188, 1199 or 7072.

The alloy stock may be homogenized prior to hot working or it may be heated and directly hot rolled. If homogenization is used, it may be carried out at a metal temperature in the range of 910 or 920°F to 960 or 1000°F for a period of time of at least 1 hour to dissolve soluble elements and to homogenize the internal structure of the metal. A preferred time period is about 4 hours or more in the homogenization temperature range. Normally, the soak time at the homogenizing temperature does not have to extend for more than 8 hours, however, longer times are not normally detrimental. 4 to 6 hours at the homogenization temperature has been found to be quite suitable. A typical homogenization temperature is 920°F.

For purposes of the present invention, it is preferred to hot roll the clad ingot without homogenizing. Thus, the ingot is hot worked or hot rolled to provide an intermediate gauge product. Hot rolling is performed wherein the starting temperature for rolling is in the range of 600 to 900°F. When the use of the alloy is for aircraft wing skins or fuselage skins, for example, the hot rolling is performed to provide an intermediate product having a thickness of about 3 to 8 inches.

After hot rolling, the intermediate gauge product is subjected to a reheating step. It is this reheating step which is so important to the present invention, particularly with respect to minimizing or avoiding soluble constituent or secondary phase particles and their adverse effect on fatigue crack growth resistance and fracture toughness. Thus, in the reheating step, the intermediate gauge product is heated to a temperature of at least 900 or 920°F, e.g., above the solvus temperature of secondary phase particles, to dissolve soluble constituents that remain from casting or may have precipitated during the hot rolling. Such constituent particles include $Al_2CuMg$, $Al_2Cu$, for example. The reheating has the effect of putting most of the Cu and Mg into solid solution. The heating can be in the range of 900 to 945°F with a preferred range being 900 or 910 to 930°F. For purposes of reheating, the intermediate gauge product can be held for about 1 to 40 hours when the metal is in the temperature range or above the solvus temperature for the soluble constituents. Preferably, times at metal temperature are in the range of 4 to 24 hours. It is important that the reheat is carefully controlled within the parameters set forth. If the reheating operation is lower than 900°F, for example, 850°F, this can leave large volumes of coarse undissolved Al$_2$CuMg and Al$_2$Cu particles, for example, which particles can have an adverse effect on the fatigue crack growth resistance in the final product. In fact, if the reheat is below the solvus temperature, these particles can even grow in size. It is the presence of such constituent particles which can limit crack propagation resistance in the final sheet product.

In clad products, the temperature and duration of the reheat is very important for another reason. That is, if the time at reheat temperature is excessive, copper can diffuse into the higher purity aluminum cladding which can detrimentally affect the corrosion protection afforded by the cladding.

After the reheat, the intermediate product is subjected to a second hot rolling operation. The second hot rolling operation is performed in the temperature range of about 500 to 900°F, preferably 600 to 850°F. The hot rolling may be performed to a final gauge, e.g., 0.25 inch or less. Alternatively, the hot rolling step can be performed to provide a second intermediate product having a thickness in the range of 0.1 to 0.3 inch. Thereafter, the second intermediate product can be cold rolled to a final gauge of 0.25 inch or less, typically in the range of 0.05 to 0.20 inch, to produce a substantially recrystallized product. An intermediate anneal may be used before cold rolling, if desired.

After cold rolling, the sheet product is then subjected to a solution heat treatment in the range of 910 to 945°F. It is important that the solution heat treatment be carefully controlled in duration. Thus, the solution heat treatment can be accomplished in 5 minutes or even less when the metal has reached the solution temperature. The time can be extended to 15 minutes or even 60 minutes. However, in clad product, care should be taken against diffusion of copper into the cladding and possible problems resulting therefrom.

Solution heat treatment in accordance with the present invention may be performed on a continuous basis. Basically, solution effects can occur fairly rapidly. In continuous treating, the sheet is passed continuously as a single web through an elongated furnace which greatly increases the heat-up rate. Long solution heat treat times may be used to dissolve the soluble constituents such as Al$_2$CuMg and Al$_2$Cu. However, long time (more than 2 hours) solution heat treatments should not be used on clad products because of the excessive Cu diffusion that can occur in the cladding. The continuous approach facilitates practice of the invention since a relatively rapid heat-up and short dwell time at solution temperature result in minimizing copper dissolution into the cladding. Accordingly, the inventors contemplate solution heat treating in as little as about 10 minutes, or less, for instance about 0.5 to 4 minutes. As a further aid to achieving a short heat-up time, a furnace temperature or a furnace zone temperature significantly above the desired metal temperatures provides a greater temperature head useful to speed heat-up times.

After solution heat treatment, it is important that the metal be rapidly cooled to prevent or minimize the uncontrolled precipitation of secondary phases, e.g., Al$_2$CuMg and Al$_2$Cu. Thus, it is preferred in the practice of the invention that the quench rate be at least 100°F/sec from solution temperature to a temperature of 350°F or lower. A preferred quench rate is at least 300°F/sec in the temperature range of 925°F or more to 350°F or less. Suitable rates can be achieved with the use of water, e.g., water immersion or water jets. Further, air or air jets may be employed. Preferably, the quenching takes place on a continuous basis. The sheet may be cold worked, for example, by stretching up to 10% of its original length. Typically, cold working or its equivalent which produces an effect similar to stretching, may be employed in the range of 0.5% to 6% of the products' original length.

After rapidly quenching, the sheet product is naturally aged. By natural aging is meant to include aging at temperatures up to 175°F.

Conforming to these controls greatly aids the production of flat rolled stock, e.g., sheet or plate, having high yield strength, improved levels of fracture toughness, increased resistance to fatigue crack growth and high resistance to corrosion, particularly using the alloy composition of the invention.

## Claims

1. A method of producing an aluminum base alloy flat rolled product such as a sheet product having high strength levels and good levels of fracture toughness and resistance to fatigue crack growth comprising:

   (a) providing a body of an aluminum base alloy containing 4.2 or 4.3 to 4.7 wt.% Cu, 1.3 to 1.7 or 1.8 wt.% Mg, 0.7 or 0.8 to 1.3 wt.% Mn, at least one of Zr, V, Hf, Cr and Sc, 0.12 or 0.15 wt.% max. Fe, 0.1 or 0.12 wt.% max. Si, the remainder aluminum, incidental elements and impurities;

(b) hot rolling the body to a slab;

(c) heating said slab to above 910°F. to dissolve soluble constituents;

(d) hot rolling the slab in a temperature range of 600 to 850 or 900°F. to a flat rolled or sheet product;

(e) solution heat treating;

(f) cooling; and

(g) aging or naturally aging to provide a product having high strength and improved levels of fracture toughness and resistance to fatigue crack growth.

2. The method in accordance with claim 1, wherein in step (b) the body is hot rolled in a temperature range of 600 to 900°F. prior to said heating.

3. The method in accordance with claim 1 or 2, wherein the product is cold rolled to a final sheet gauge after said hot rolling.

4. The method in accordance with claim 3, wherein the product has a gauge of 0.05 to 0.15 or 0.25 inch.

5. The method in accordance with any of claims 1 to 4, wherein the product has a cladding of higher purity aluminum alloy than said body.

6. The method in accordance with claim 5, wherein the cladding is selected from AA1100, 1200, 1230, 1135, 1235, 1435, 1145, 1345, 1250, 1350, 1170, 1175, 1180, 1185, 1285, 1188, 1199 or 7072.

7. The method in accordance with any of claims 1 to 6, in which the body of an aluminum base alloy provided in step (a) contains 0.03 to 1 wt.% Zr.

8. The method in accordance with any of claims 1 to 7, which comprises providing in step (a) a body of an aluminum base alloy containing 4.2 to 4.7 wt.% Cu, 1.3 to 1.7 wt.% Mg, 0.8 to 1.3 wt.% Mn, 0.05 to 0.5 wt.% Zr, 0.12 wt.% max. Fe, 0.1 wt.% max. Si, the remainder aluminum, incidental elements and impurities; solution heat treating in step (e) for a time of less than 60 minutes in a temperature range of 910 to 1050°F.; and rapidly cooling in step (b).

9. The method in accordance with claim 8, wherein the solution heat treatment is in a temperature range of 910 to 945°F. and/or is for a time of less than 15 minutes.

10. The method in accordance with any of claims 1 to 9, wherein in step (c) said slab is reheated to 910 to 945°F. to dissolve soluble constituents.

European Patent Office

# EUROPEAN SEARCH REPORT

Application Number

EP    91 12 0780

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 336 075 (THE BOEING COMPANY) <br> * column 1, paragraph 1; claims 1,7,14; example 1 * | 1,2 | C22C21/16 <br> C22F1/057 <br> //B32B15/01// |
| A | EP-A-0 038 605 (THE BOEING COMPANY) <br> * claim 1; example 1 * | 1 | |
| A | GB-A-1 122 912 (ALUMINIUM COMPANY OF AMERICA) <br> * claims 1,10,15 * | 1 | |
| A | 'METALS HANDBOOK, 9TH EDITION,   VOL 2, PROPERTIES AND SELECTIONS: NONFERROUS ALLOYS AND PURE METALS' <br> 1979 , AMERICAN SOCIETY FOR METALS , METALS PARK, OHIO, US. <br> *PAGE 50, CENTRE COLUMN, LAST PARAGRAPH - RIGHT-HAND COLUMN, PARAGRAPH 1* <br> *PAGE 73, LAST LINE - PAGE 74, LEFT-HAND COLUMN, LINE 9* | 6 | |
| A | J.E. HATCH 'ALUMINIUM, 1ST EDITION, VOL 1, PROPERTIES AND PHYSICAL METALLURGY' <br> 1984 , AMERICAN SOCIETY FOR METALS , METALS PARK, OHIO, US. <br> * page 267 - page 269 * <br> * page 361 - page 365 * <br> * page 372 - page 374 * | | **TECHNICAL FIELDS SEARCHED (Int. Cl.5)** <br><br> C22C <br> C22F <br> B32B |

The present search report has been drawn up for all claims

| Place of search | Date of completion of the search | Examiner |
|---|---|---|
| THE HAGUE | 02 MARCH 1992 | GREGG N. R. |

EPO FORM 1503 03.82 (P0401)